(19) Europäisches Patentamt / European Patent Office / Office européen des brevets

(11) **EP 1 876 435 A1**

(12) **EUROPEAN PATENT APPLICATION**

(43) Date of publication:
**09.01.2008 Bulletin 2008/02**

(51) Int Cl.:
*G01M 11/00* [(2006.01)]   *H04B 10/08* [(2006.01)]
*G01N 21/65* [(2006.01)]   *H01S 3/30* [(2006.01)]
*G01J 3/44* [(2006.01)]

(21) Application number: **06116688.0**

(22) Date of filing: **06.07.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Agilent Technologies, Inc.**
**Santa Clara, CA 95051 (US)**

(72) Inventor: **Nebendahl, Bernd**
**71254, Ditzingen (DE)**

(74) Representative: **Barth, Daniel Mathias et al**
**Agilent Technologies Deutschland GmbH**
**Patentabteilung**
**Herrenberger Strasse 130**
**71034 Böblingen (DE)**

(54) **Optical reflectometry loss determination**

(57)   The invention relates to determining an optical loss (L) along a device under test - DUT- (3), comprising receiving an optical scatter signal (R) returning from the DUT (3) in response to a probe signal (S) launched into the DUT (3), wavelength dependent separating from the scatter signal (R) a first response signal (R1) around a first response wavelength ($\lambda_1$) and a second response signal (R2) around a second response wavelength ($\lambda_2$), detecting a first signal ($U_{as}$) indicating the received optical power of the first response signal (R1) and a second signal ($U_s$) indicating the received optical power of the second response signal (R2), and determining the optical loss (L) on the base of the first signal ($U_{as}$) and the second signal ($U_s$).

Fig.1

EP 1 876 435 A1

## Description

BACKGROUND ART

The present invention relates to determining an optical loss along a device under test by optical reflectometry measurements.

For determining optical properties of an optical device under test (DUT), e.g. an optical fiber, it is known to apply a so-called optical time domain reflectometry (OTDR) or optical frequency domain reflectometry (OFDR). For that purpose an optical signal is coupled into the DUT, which travels along the DUT and which is partly scattered by the DUT, e.g. due to inhomogeneities in the silica structure (Rayleigh scattering) along the optical fiber or due to interaction of the optical signal with optical phonons (Raman scattering) or acoustical phonons (Brillouin scattering). Some of the scattered light travels back to the DUT input. The power of this returning light is measured and evaluated.

It is further known to separate different spectral components of the backscattered light from an optical fiber and to put these components into relation in order to obtain a physical property of the fiber. Well-known scatter signals returning at different wavelengths are so-called Raman scatterings comprising a so-called (Raman) Stokes signal and a (Raman) Antistokes signal. An arrangement for measuring a temperature distribution along an optical fiber by determining Raman scatterings is e.g. described in US 5,618,108. The related technical background is e.g. described, in "Optical Fiber Communications" by J. Senior, Prentice Hall, 1992, pages 91-96.

The Stokes signal, unlike the Antistokes signal, is only weakly depending on the temperature. Therefore, a rough estimation of an optical loss along the fiber might be done by evaluating the Stokes signal. However, with such evaluation it is generally not possible to distinguish between temperature steps and a loss steps: a small step within the Stokes signal profile might indicate a temperature step as well as a small loss step.

DISCLOSURE

It is an object of the invention to provide an improved determination of an optical loss along a DUT. The object is solved by the independent claims. Further embodiments are shown by the dependent claims.

According to an embodiment of the invention, an optical loss along a device under test - DUT- is determined, whereby an optical selector receives an optical scatter signal returning from the DUT in response to a probe signal launched into the DUT, wavelength dependent separating a first response signal around a first response wavelength $\lambda_1$ and a second response signal around a second response wavelength $\lambda_2$ from the scatter signal, an optical detector receiving the first and second response signal, performing an opto-electrical conversion, thereby generating a first electrical signal having a voltage or current being proportional to the received optical power of the first response signal and a second electrical signal having a voltage or current being proportional to the received optical power of the second response signal. The optical loss along the DUT is derived on the base of the measured first signal and the second signal.

The above-described detection of response signals is referred to as optical reflectometry. In a first alternative, also referred to as optical time domain reflectometry (OTDR), the reflected signals are directly measured over the time. According to a further alternative, also known as optical frequency domain reflectometry (OFDR) the probe signal is an amplitude-modulated signal, where the frequency is swept while the reflected intensity is recorded. This intensity versus frequency signal is transformed in the time domain using a Fourier transformation. After the transformation the obtained information is identical to information obtained from the time domain method.

In a further embodiment, the first signal is weighted being multiplied with a first weighting function and the second signal is weighted being multiplied with a second weighting function, and wherein determining optical loss comprises determining a difference between both weighted signals.

In a further embodiment, the first weighting function signal is chosen to be inverse to the second weighting function except to a constant sensitivity ratio factor, whereby the sensitivity ratio factor is chosen to take into account the difference of sensitivity in detecting different wavelength at the optical detector, i.e. in detecting the first signal at the first response wavelength, and the second signal at the second response wavelength.

In a further embodiment, determining the optical loss comprises taking a logarithm of the difference between the weighted signals.

In a further embodiment, determining the optical loss comprises multiplying the logarithm with a first constant value (e.g. the number 5) and subtracting a second constant value, whereby the second constant value is dependent on the optical power of the probe signal, and the detection sensitivities of the optical detector detecting the first signal at the first response wavelength and the second signal at the second response wavelength.

In a further embodiment, the first signal and the second signal are each functions representing a received optical power relating to a position along the length of the DUT (i.e. representing a power over location), whereby the DUT preferably is an optical fiber. The analyzer derives these functions by performing a time-to-location conversion of the first signal and the second signal each being detected over the time (i.e. representing a power over time). Such time-to-location conversion might be based on a group velocity at the wavelength of the probe signal.

The chromatic dispersion of an optical material of the DUT leads to differences in the speed of light of different wavelengths of signals traveling through the DUT. If the first response signal and the second response have different wavelengths, both signals will have different group velocities. In a further embodiment, the method of determining the optical loss takes into account the different group velocities at the different wavelengths of the first and second response signals. Therefore, a first time-to-location conversion of the first detected signal might be derived by changing the dependency over time of the first response signal on the base of a first group velocity at the first wavelength, and a second time-to-location conversion of the second signal might be derived by changing the dependency of the second detected signal over time of the second response signal on the base of a second group velocity at the second wavelength.

In a further embodiment, wherein determining the weighting functions each comprise multiplying an attenuation difference between the attenuation of the first wavelength and the second wavelength with the position, wherein the attenuation difference represents a difference of the first attenuation constant at the first wavelength $\lambda_1$ and the second attenuation constant at the second wavelength $\lambda_2$ within the DUT. The first attenuation constant and the second attenuation constant might be taken from a data sheet characterizing the optical properties of the DUT. Alternatively, the constants might be determined by evaluating the first signal and the second signal at known constant environmental temperature along the DUT.

In a further embodiment, a temperature profile along the DUT is determined on the base of determining a ratio of the first signal and the second signal.

In a further embodiment, the first response signal represents a so-called Raman Antistokes signal and the second response signal represents a so-called Raman Stokes signal.

In a further embodiment, the analyzer provides discrete optical loss values at distinct locations on the base of sequences of digital power values of the response signals received from the DUT. Therefore, the analyzer might determine time discrete power response signals by sampling continuously received electrical signals from the optical detector, preferably at equidistant time instances. Similar to the time-to-location conversion described above, the time discrete values of both response signals might be transformed each on the base of the appropriate group velocity.

Due to the different conversion factors, the transformed sequences of both responses might have different location grids. In order to adjust the sequences to each other so that they refer to the same location grid, an interpolation of one of the sequences with respect to the other sequence might be performed. Therefore, a new set of discrete values might be determined from the sampled power values of at least one of the first and second transformed sequence by applying an interpolation algorithm, e.g. by applying a linear interpolation, a polynomial interpolation or a so-called spline interpolation.

In a further embodiment, the stimulus signal is generated to comprise a plurality of optical pulses, wherein the pulses represent a digital sequence. The first and second signal then each represents a superposition of time shifted power responses of a single pulse. For obtaining the impulse responses of a single pulse, the analyzer performs a convolution of the first signal and the second signal each with said digital sequence.

The digital sequence might be a so-called pseudo noise sequence, a set of so-called Golay codes or any sequence that shows a single resulting pulse with small side lobe pulses after autocorrelation. In order to determine the resulting power responses, the analyzer performs a correlation function of the power of the probing signal with each both the power responses. This correlation might be performed by a digital convolution of the digital sequence and the sequence of sampled power values.

The advantage of such correlation methods is that the DUT responses comprise significantly more energy (depending on the number of pulses of the pulse sequence) compared to responses of a single pulse without reducing the spatial resolution.

In a further embodiment, for determining the optical loss (an optical reflectometry system is provided comprising an optical selector for receiving an optical scatter signal returning from the DUT, wavelength dependent separating the first response signal around the first response wavelength $\lambda_1$ and the second response signal around the second response wavelength $\lambda_2$, an optical detector for measuring the first signal indicating the received optical power of the first response signal and the second signal indicating the received optical power of the second response signal (R2), and an analyzer adapted for determining the optical loss on the base of the first signal and the second signal.

In a further embodiment, a control unit is provided to control at least one of the light source emitting the probe signal, the optical selector, the optical detector and the analyzer, so that the emission of pulses of the light source, the selection of response signals by the optical selector, the power detection of the optical selector and the signal processing within the analyzing unit are coordinated.

In further embodiments, the first and second response signals are detected sequentially. Therefore, the optical selector might comprise switchable filter that, depending on its switch state, either selects a spectral component around the first response wavelength and a spectral component around the second response wavelength. For detailed information of an application of such switchable optical filter within a Raman Antistokes and Raman stokes reflectometry system, reference is made to European patent application 05105036 of the same applicant.

In an alternative thereto, the optical selector comprises an optical shutter, wherein depending on the position or state of the optical shutter, the optical detector either receives different spectral parts of the response signal. For detailed information of an application of such optical shutter within a Raman Antistokes and Raman stokes reflectometry system, reference is made to International patent application PCT/EP2006/050483 of the same applicant.

Embodiments of the invention can be partly or entirely embodied or supported by one or more suitable software programs, which can be stored on or otherwise provided by any kind of data carrier, and which might be executed in or by any suitable data processing unit. Software programs or routines can be preferably applied by the analyzer or by a control unit of the optical reflectometry system.

BRIEF DESCRIPTION OF DRAWINGS

Other objects and many of the attendant advantages of embodiments of the present invention will be readily appreciated and become better understood by reference to the following more detailed description of further embodiments in connection with the accompanied drawing(s). Features that are substantially or functionally equal or similar will be referred to with the same reference sign(s).

Fig.1 shows a basic measurement setup with an OTDR system and a DUT for receiving and evaluating power responses of response signals at different wavelengths separated from a signal returning from the DUT in response to a probe signal,

Fig. 2 - Fig.4 show a set of exemplary equations referring to a signal processing of an OTDR system for determining optical properties,

Fig.5a shows a diagram with exemplary power responses related to the response signals,

Fig.5b shows a diagram of a temperature distribution over the length of the DUT as result of equations of Fig.2,

Fig.5c shows a diagram of an optical loss over the length of the DUT as result of equations of Fig.2,

Fig.6 shows a sketch diagram of the spectral intensity over the wavelength of the response signal returning from the DUT, and

Fig.7 shows a sketch diagram of an optical loss parameter over the wavelength.

In the following examples, the invention is described by using results of OTDR. However, as described above, the invention is not limited to OTDR, but covers all reflectometry methods like OTDR or OFDR.

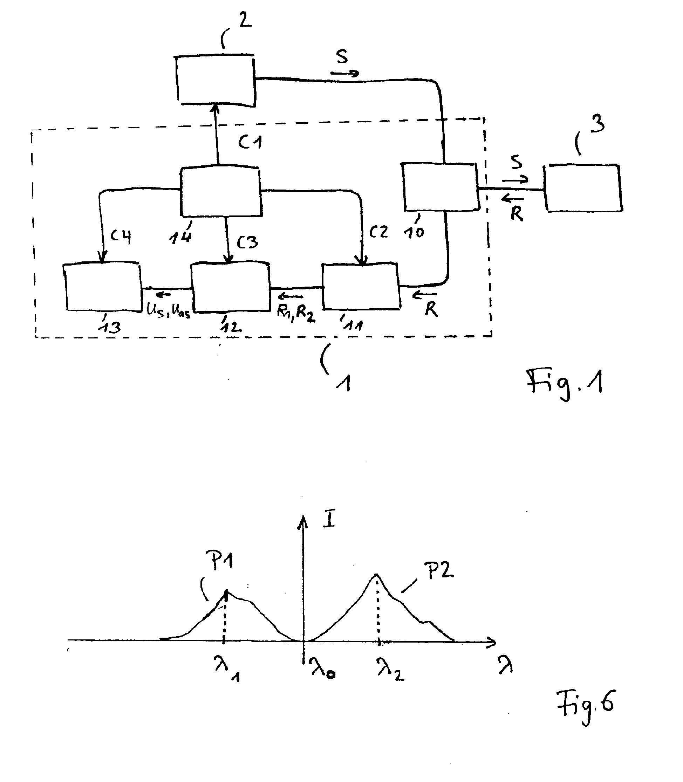

Fig.1 shows an OTDR system 1, an optical source 2 and an optical device under test (DUT) 3. The OTDR system 1 comprises an optical coupler 10, an optical selector or splitter 11 an optical detector 12 and an analyzing unit 13 and a control unit 14. The optical coupler 10 optically connects the optical source 2, the DUT 3 and the optical splitter 11 to each other, such that a stimulus or probe signal S emitted from the optical source 2, preferably a narrow band signal at a transmission or probing signal wavelength $\lambda_0$ is provided to the DUT 3 and a response R returning from the DUT 3 is provided to the optical selector 11.

The light source 2 preferably is a laser diode with high output power generating a narrow band probe signal S.

Scattering effects, e.g. Rayleigh scattering, Fresnel reflections, Raman or Brillouin scattering cause a fraction of the forward traveling probe signal in the DUT to continuously reflects back, forming a response signal traveling in the opposite direction. Whereas the so-called Fresnel reflection part or the so-called Rayleigh backscattering are returning at the same wavelength $\lambda_0$ with respect to the probe signal, the Raman and Brillouin backscatter signal parts are each composed of so-called Antistokes light and stokes light returning at wavelengths different to the transmission wavelength $\lambda_0$.

The optical selector 11 selects a first spectral part of the response signal R around a first response wavelength $\lambda_1$ and a second spectral part around a second response wavelength $\lambda_2$, generates a first response signal R1 and a second response signal R2 therefrom and provides these signals R1 and R2 to the optical detector 12. The optical detector performs an opto-electrical conversion to the optical response signals R1 and R2, and generates corresponding first and second electrical signals $U_{as}$, $U_s$ proportional to the each received optical power of said first and second response signal, in the following also being referred to as power responses.

By way of example, first power response $U_{as}$, further also referred to as Antistokes signal, represents the power of the Antistokes scatterings, and second power signal $U_s$, further also referred to as Stokes signal, represents the power of the Stokes scatterings.

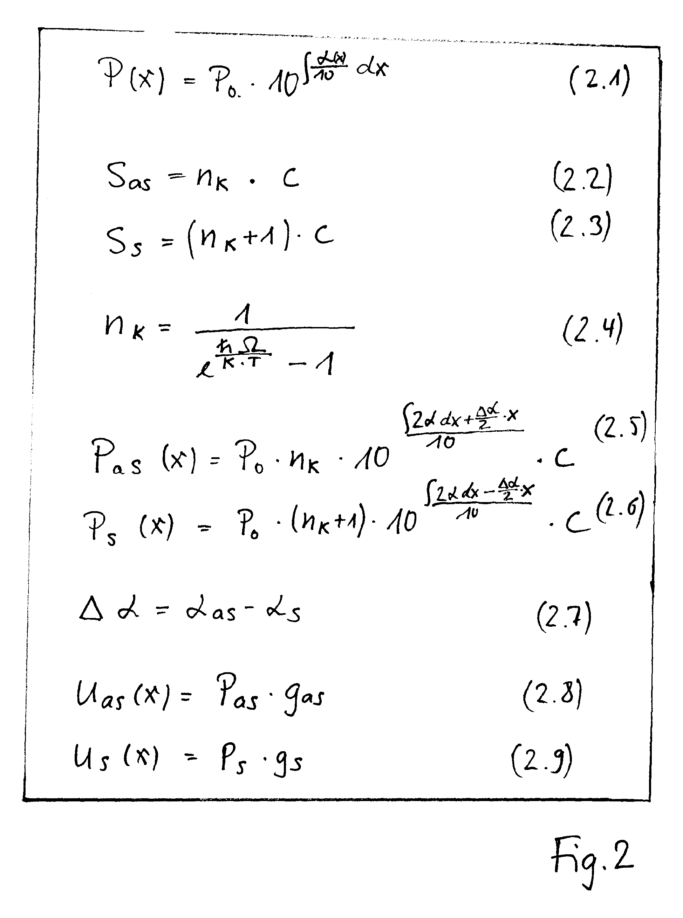

The analyzer 13 determines the optical loss L on the base of the first signal $U_{as}$ and the second signal $U_s$ as being explained in details under Fig.2.

The system further might comprise a control unit 14 for controlling at least one of the light source 2, the optical selector 11, the detector 12 and the analyzer 13 by appropriate control signals C1- C4.

In an embodiment, the optical selector 11 provides both the first response signal R1 and the second response signal in parallel to a detector unit 12. This unit 12 might comprise two separate detector elements for detecting the first power response P1 and the second power response P2 correspondingly.

Alternatively, the first response signal R1 and the second response signal R2 are provided sequentially to one detector element 12. Therefore, the control unit 14 might in a first step instruct the light source 2 to provide a first probe signal to the DUT 3, and the selector 11 to select the first response signal R1. In a second step, the light source 2 is instructed to provide a second probe signal and the selector 11 to select the second response signal R2. Switching the selection within the selector 11 might be performed by moving an optical shutter such that alternatively one of the selected response signals R1 or R2 is blocked form the detector 12.

In a further embodiment, the first signal and the second signal are each functions representing a received optical power relating to a position along the length of the DUT (i.e. representing a power over location). The analyzer derives these functions by performing a time-to-location conversion of the first signal and the second signal each being detected over the time (i.e. representing a power over time).

The refractive index of the DUT material varies with the wavelength of the traveling optical signal. This leads to a wavelength dependency of the group delay, wherein the group delay is relative velocity variation dependent on the wavelength.

This effect leads to differences in the speed of light of the two response signal R1 and R2. Therefore, in a further embodiment, the different group velocities are taken into account, such that, a first time-to-location conversion of the first detected signal is derived by changing the dependency over time on the base of a first group velocity at the first wavelength, and a second time-to-location conversion of the second signal is derived by changing the dependency of the second detected signal over time I on the base of a second group velocity at the second wavelength.

In an embodiment of the invention, the analyzer 13 determines the group velocities on the base of the length I, the dispersion coefficients dependent on the material and the geometry of the DUT 3 and the wavelengths $\lambda_1$ and $\lambda_2$. Alternatively, the group velocities might be determined by performing measurements.

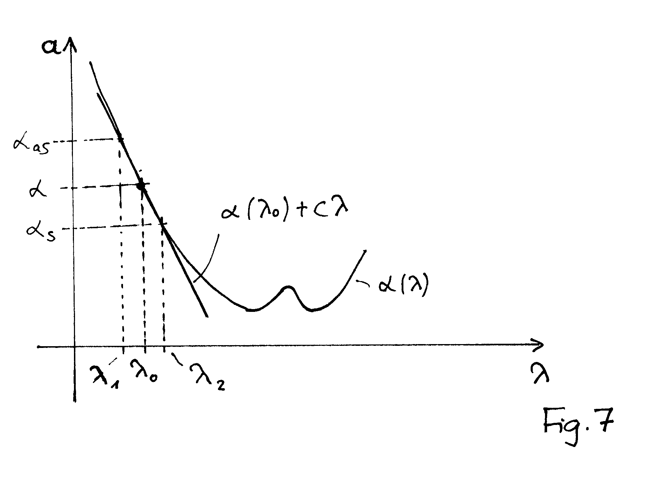

Fig. 6 shows an exemplary sketch diagram depicting the intensity I of the first response signal R1 (Antistokes signal) and the second response signal R2 (Stokes signal) over the wavelength $\lambda$. Further, the transmission wavelength $\lambda_0$ the first center wavelength $\lambda_1$, and second center wavelength $\lambda_2$ are depicted at the wavelength axis.

In a possible realization, the transmission wavelength $\lambda_0$ is about 1064 nm, the first center wavelength at $\lambda_1$ of the Antistokes signal is about 1014 nm and the second center wavelength $\lambda_2$ of the Stokes signal is about 1114 nm. Thus for selecting the first and second response signals R1 and R2, corresponding band pass filters might each have a range of about 100 nm around first and second center wavelengths $\lambda_1$ and $\lambda_2$ respectively.

The probe signal S1 might be an amplitude modulated light signal, a single pulse or a sequence of pulses.

Regarding the low Raman signal level, a common averaging process might not deliver a sufficient signal-to-noise ratio (SNR) within an acceptable time frame. Therefore, instead of using single pulses, a code correlation technique is used, which significantly improves signal strength and thus SNR.

Whereas pseudo random codes as probing sequences are often suggested for correlation procedures, remaining side lobes in the autocorrelation result limit their usefulness in test instruments. On the contrary, complementary codes, in particular Golay codes, show at least under ideal conditions, no side lobes in the sum of their respective autocorrelation products. A Raman scatter signal taken by reflectometric measurements from an optical fiber is well suited for such a correlation technique because of its rather homogeneous character.

Using such correlation technique, the light source 2 is modulated according to a specific predetermined digital sequence. The response signals R1 and R2 are composed of an overlay of a plurality of corresponding shifted impulse responses from the DUT. To determine the resulting impulse responses and therewith the resulting power responses P1 and P2, the analyzing circuit 13 might perform a correlation between each the stimulus signal and the partial responses received. As result of these correlations, the power responses P1 and P2 versus time are determined. Alternatively this correlation might be performed in the digital time domain by sampling both the partial responses and digitally convoluting the sampled sequences with the predetermined digital signal.

The autocorrelation function of a digital pseudo random code shows a maximum at zero shift and residual side lobes. Thus, neglecting the side lobes, the correlation of a probe signal S with a response signal from DUT 3 represents the impulse answer of DUT 3. Alternatively, complementary codes like so-called Golay codes can be used. Such codes have the advantage that the side lobes are cancelled out. Further information of applying impulse sequences in OTDR applications is described in the international application PCT/EP2004/052670 of the same applicant.

In an embodiment, the DUT 3 is an optical fiber with a far open end. Alternatively, to an open far end it is possible to provide a mirror at the far fiber end. In this case, the response signals R1 and R2 will show two sharp peaks followed by second order scattering signals. The time distance between these peaks or between each peak and the time instance of starting the probe signal might used for determining the group velocities in order to determining appropriate time-to-location conversion factors as described above.

Fig 2 shows a first set of exemplary equations showing relations of the measured first and second measured signals $U_{as}$ and $U_s$ to the power P of the probe signal S.

Equation 2.1 shows a power P(x) over a position x along the DUT 3, whereby $P_0$ is the incident power at the near end of the DUT 3 (x=0) and $\alpha$ is the fiber attenuation of the probe signal (note that in a homogeneous fiber, the fiber attenuation $\alpha$ is constant with respect to the fiber).

Equation 2.2 shows the Antistokes scatter factor $s_{as}$ being the sum of the Planck distribution $n_k$ multi-

plied with a constant c.

Equation 2.3 shows the Stokes scatter factor $s_s$ being the sum of the Planck distribution $n_k + 1$ multiplied with a constant c.

Equation 2.4 shows the dependency of the Planck distribution $n_k$ with respect to the temperature T, with $\hbar$ being the reduced Planck constant, $\Omega$ being the Raman shift, $k_B$ being the Boltzmann constant.

Equation 2.5 shows the optical power $P_{as}$ of the Antistokes backscatter signal R1 being dependent on the incident power $P_0$, the Antistokes scatter factor $s_{as}$, the specific attenuation of the probe signal $\alpha$ and an attenuation difference $\Delta\alpha$ between the specific attenuations of the Antistokes signal and the Stokes signal.

Equation 2.6 shows the optical power $P_s$ of the Stokes backscatter signal R2 being dependent on the incident power $P_0$, the Stokes scatter factor $s_s$, the specific attenuation of the probe signal $\alpha$ and an attenuation difference $\Delta\alpha$ between the specific attenuations of the Antistokes signal and the Stokes signal.

Equation 2.7 shows the attenuation difference $\Delta\alpha$ being the difference between the specific attenuation of the Antistokes signal $\alpha_{as}$ and the specific attenuation of the Stokes signal $\alpha_s$.

Equation 2.8 shows the first signal $U_{as}$ derived from the optoelectrical conversion of the first optical power $U_{as}$ of the Antistokes backscatter signal R1 as multiplication of the first optical power $P_{as}$ with a first sensitivity factor gas, whereby the sensitivity factor relates to the wavelength $\lambda_1$ of the Antistokes backscatter signal R1.

Equation 2.9 shows the second signal $U_s$ derived from the optoelectrical conversion of the second optical power $U_s$ of the Stokes backscatter signal R2 as multiplication of the second optical power $P_s$ with a second sensitivity factor gas, whereby the sensitivity factor relates to the wavelength $\lambda_2$ of the Stokes backscatter signal R2.

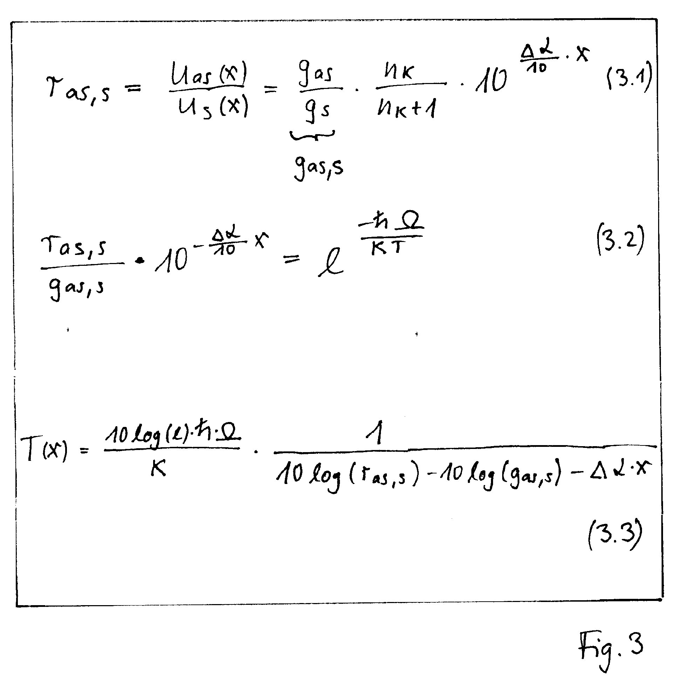

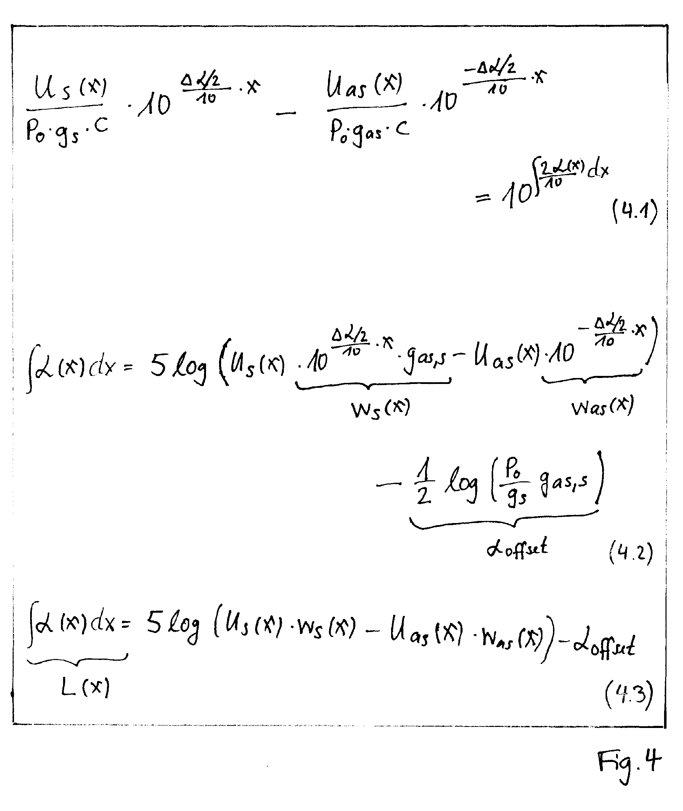

Fig.3 shows a set of equations deriving a temperature profile along the DUT 3 on the base of the first and second signals $U_{as}$ and $U_s$.

Equation 3.1 shows a signal ratio $r_{as,s}$ as ratio between the first and second signals $U_{as}$ and $U_s$, said ratio being dependent of a sensitivity ratio $g_{as,s}$ between first and second sensitivity factor gas and $g_s$, the Planck distribution $n_k$ and the attenuation difference $\Delta\alpha$ multiplied by the position x.

Equation 3.2 shows a conversion of equation 3.1.

Equation 3.3 shows a resolution of equation 3.2 with the temperature T(x) being a function of the signal ratio $r_{as,s}$ and the position x multiplied by the attenuation difference $\Delta\alpha$. The attenuation difference $\Delta\alpha$ takes into account the wavelength dependency of the attenuation of the optical material of the DUT. The attenuation of the fiber can be derived from a data sheet depicting the fiber attenuation over wavelength as shown in Fig. 7, or alternatively can be derived from measurements.

Therewith, the temperature profile T(x) can be determined on the base of the measurement of the first and second signal, the apparatus constant $g_{as,s}$ and the DUT constant $\Delta\alpha$.

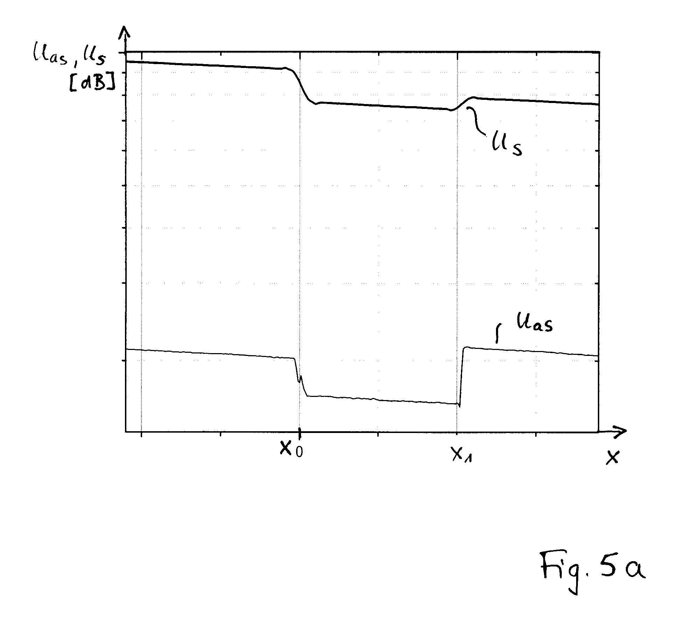

Fig.4 shows a set of equations deriving a loss profile along the DUT 3 on the base of the first and second signals $U_{as}$ and $U_s$.

Equation 4.1 is derived from a combination of equations 2.5, 2.6, 2.8 and 2.9.

Equation 4.2 is derived by a conversion of equation 4.1, thereby introducing first and second weighting functions $w_{as}(x)$ and $w_s(x)$ each being a function of the position x. Thereby the first weighting function ($w_{as}(x)$ is inverse to the second weighting function $w_s(x)$ except to the sensitivity ratio ($g_{as,s}$). Further an offset attenuation $\alpha_{offset}$ is defined being dependent on the initial power $P_0$ and the sensitivity factors gas and $g_s$.

As result, equation 4.3 shows the loss profile L (x) being a function of the first signal $U_{as}$ multiplied by the first weighting function $w_{as}(x)$, the second signal $U_s$ multiplied by the second weighting function $w_s(x)$, and the offset attenuation $\alpha_{offset}$. The loss generally equals to the integral of the fiber attenuation over the position. An attenuation profile might therefore be derived by differentiating the loss profile.

In operation, the analyzer might perform the measurement of the first and second signal $U_{as}$ and $U_s$ in real time, these functions being stored in a memory. The temperature and/or loss profile might be carried out by a post-processing of the stored signals and the apparatus and DUT constants.

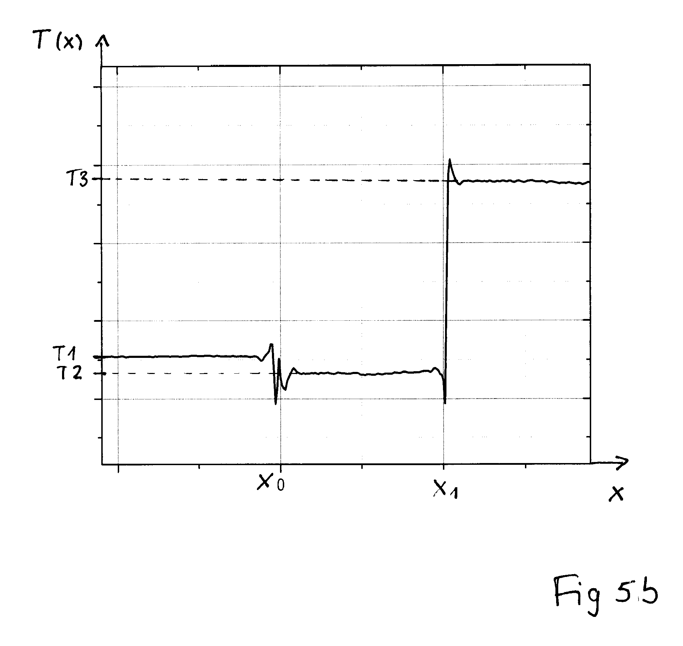

Fig.5a graphically depicts a laboratory measurement showing the relative magnitude of signals $U_{as}$ and $U_s$ at a logarithmic scale over the position x along a section of the DUT 3.

By way of example the DUT 2 comprises two optical fiber sections connected by means of a pair of optical connectors at the position $x_0$. The connectors represent an optical discontinuity causing a power loss (such discontinuity might also be caused by any fiber bending, splice, etc). Further, the DUT is exposed to section-wise different constant temperatures.

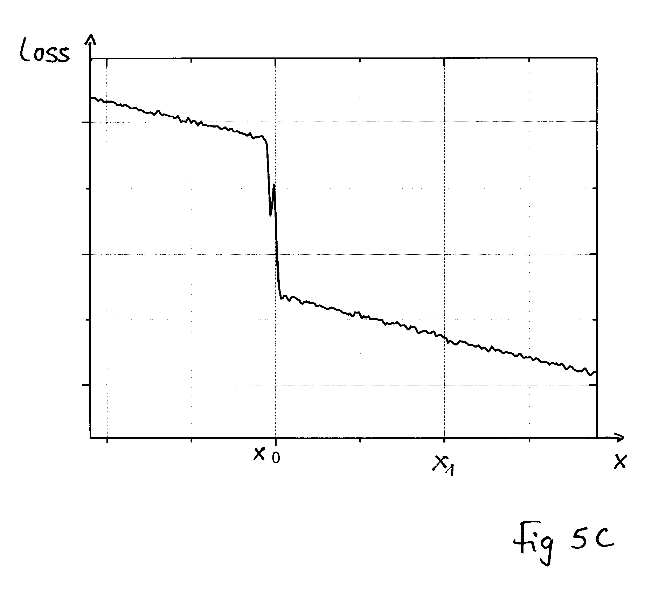

Figs. 5b and 5c graphically depicts evaluation results of the measured signals according to equations described above. Fig.5b shows a temperature profile having a substantially constant first temperature T1 in a section before the first position $x_0$, a substantially constant second temperature T2 in a section between first position $x_0$ and the second position $x_1$ and a substantially constant third temperature T3 in the subsequent section. Fig.5c shows a loss profile having a substantially linear loss over the length of the fiber except at the first position $x_0$, where the profile shows an attenuation jump caused by the discontinuity power loss.

Fig.7 shows a sketch diagram depicting the specific optical loss $\alpha(\lambda)$ of the DUT over the wavelength $\lambda$, showing the probing signal attenuation $\alpha(\lambda_0) = \alpha_0$, the first response signal attenuation $\alpha(\lambda_1) = \alpha_{as}$, and the second response signal attenuation $\alpha(\lambda_2) = \alpha_s$.

In the wavelength region of interest, e.g. in the region of +/- 50 nm around a transmission wavelength $\lambda_0$ of 1064 nm, the loss function $\alpha(\lambda)$ is substantially linear. Therewith, the probing signal attenuation substantially is the mean attenuation of both first and second response signal attenuation. Therefore, first and second response signal attenuations can be expressed by means of the probing signal attenuation $\alpha_0$ and the attenuation difference $\Delta\alpha$.

$$\alpha_{as} = \alpha_0 + \Delta\alpha/2$$

$$\alpha_s = \alpha_0 - \Delta\alpha/2$$

In an alternative to determining continuous power responses, the analyzer 13 samples power values of both first and second signals at distinct equidistant time instances. However, after performing a time-to-position transformation of the response values, the transformed samples values of the first power response and the transformed values of the second power response do not refer to the same positions du to the different conversion factors. Therefore, an interpolation might be performed to one of the sets of sampled values (e.g. by means of a linear interpolation, a square interpolation or a so-called cubic spline interpolation constructed of piecewise third-order polynomials).

**Claims**

1. A method of determining an optical loss (L) along a device under test - DUT- (3), comprising:

   - receiving an optical scatter signal (R) returning from the DUT (3) in response to a probe signal (S) launched into the DUT (3),
   - wavelength dependent separating from the scatter signal (R) a first response signal (R1) around a first response wavelength ($\lambda_1$) and a second response signal (R2) around a second response wavelength ($\lambda_2$),
   - detecting a first signal ($U_{as}$) indicating the received optical power ($U_{as}$) of the first response signal (R1) and a second signal ($U_s$) indicating the received optical power ($P_s$) of the second response signal (R2), and
   - determining the optical loss (L) on the base of the first signal ($U_{as}$) and the second signal ($U_s$).

2. The method of claim 1, wherein the first signal ($U_{as}$) is weighted by a first weighting function ($w_{as}(x)$) and the second signal ($U_s$) weighted by a second weighting function ($w_s(x)$), and wherein determining the optical loss (L) comprises determining a difference between both weighted signals.

3. The method of claim 2, wherein the first weighting function ($w_{as}(x)$) is inverse to the second weighting function ($w_s(x)$) except to a constant factor ($g_{as,s}$), whereby the constant factor ($g_{as,s}$) is chosen to take into account the difference of sensitivity of detecting the optical power at the different wavelengths ($\lambda_1$, $\lambda_2$) of the response signals (R1, R2).

4. The method of claim 2 or 3, wherein determining the optical loss (L) comprises taking a logarithm of the difference between the weighted signals.

5. The method of claim 4, wherein determining the optical loss (L) comprises multiplying the logarithm by a constant value and subtracting a constant value, whereby the constant value is dependent on the optical power of the probe signal, and the detection sensitivities of detecting the first signal ($U_{as}$) and the second signal ($U_s$).

6. The method of claim 3 or 4, wherein the first signal ($U_{as}$) and the second signal ($U_s$) are each functions over the position (x) along the DUT (3) that are derived by a time-to-location conversion of the detected optical power over time of the first and second response signal (R1, R2).

7. The method of claim 6, wherein the first signal ($U_{as}$) is derived by changing the dependency of the detected optical power over time of the first response signal (R1) by using a first conversion factor based on a first group velocity at the first wavelength ($\lambda_1$), and wherein the second signal ($U_s$) is derived by changing the dependency of the detected optical power over time of the second response signal (R2) by using a second conversion factor on the base of a second group velocity at the second wavelength ($\lambda_2$).

8. The method of claim 2 or any one of the above claims, wherein determining the weighting functions ($w_{as}(x)$, $w_s(x)$) each comprise multiplying an attenuation difference ($\Delta\alpha$) with the position (x), wherein the attenuation difference ($\Delta\alpha$) represents a difference of a first attenuation constant ($\alpha_{aS}$) of the first wavelength ($\lambda_1$) and a second attenuation constant ($\alpha_S$) of the second wavelength ($\lambda_2$) within the DUT (3).

9. The method of claim 8, wherein the first attenuation constant ($\alpha_{aS}$) and the second attenuation constant ($\alpha_S$) are determined by evaluating the first signal

($U_{as}$) and the second signal ($U_s$) at a known constant temperature (T) along the DUT (3).

10. The method of claim 1 or any one of the above claims, further determining a temperature profile (T) along the DUT (3) on the base of determining a ratio of the first signal ($U_{as}$) and the second signal ($U_s$).

11. The method of claim 1 or any one of the above claims, wherein the analyzer (13) is adapted for determining a first sequence of signal values and a second sequence of signal values by sampling the first signal ($U_{as}$) and the second signal ($U_s$), by applying an interpolation to one of the sequences in order to derive an adapted sequence being synchronized to the other of the sequences, and by determining the optical loss (L) as sequence of values at distinct locations derived from the synchronized sequences.

12. The method of claim 1 or any one of the above claims, further comprising a control unit adapted to control the light source (2) such that the stimulus signal (S) comprises a plurality of optical pulses, wherein the plurality of pulses represents a digital sequence, and wherein the analyzer (13) is adapted for convoluting the first signal ($U_{as}$) and the second signal ($U_s$) each with said digital sequence.

13. An optical reflectometry system (1) for determining an optical loss (L) along a device under test - DUT- (3) comprising:

   - an optical selector (11) adapted for receiving an optical scatter signal (R) returning from the DUT (3) in response to a probe signal (S) launched into the DUT (3), wavelength dependent separating a first response signal (R1) around a first response wavelength ($\lambda_1$) and a second response signal (R2) around a second response wavelength ($\lambda_2$) from the scatter signal (R),
   - an optical detector (12) adapted for measuring a first signal ($U_{as}$) indicating the received optical power ($P_{as}$) of the first response signal (R1) and a second signal ($U_s$) indicating the received optical power ($P_s$) of the second response signal (R2), and
   - an analyzer (13) adapted for determining the optical loss (L) on the base of the first signal ($U_{as}$) and the second signal ($U_s$).

14. A software program or product, preferably stored on a storage device, for controlling the execution of the method of the above claim, when run on a data processing system.

Fig. 1

Fig. 6

$$P(x) = P_0 \cdot 10^{\int \frac{\alpha(x)}{10} dx} \qquad (2.1)$$

$$S_{as} = n_K \cdot c \qquad (2.2)$$

$$S_s = (n_K + 1) \cdot c \qquad (2.3)$$

$$n_K = \frac{1}{e^{\frac{\hbar \cdot \Omega}{K \cdot T}} - 1} \qquad (2.4)$$

$$P_{as}(x) = P_0 \cdot n_K \cdot 10^{\frac{\int 2\alpha \, dx + \frac{\Delta\alpha}{2} \cdot x}{10}} \cdot c \qquad (2.5)$$

$$P_s(x) = P_0 \cdot (n_K + 1) \cdot 10^{\frac{\int 2\alpha \, dx - \frac{\Delta\alpha}{2} \cdot x}{10}} \cdot c \qquad (2.6)$$

$$\Delta \alpha = \alpha_{as} - \alpha_s \qquad (2.7)$$

$$U_{as}(x) = P_{as} \cdot g_{as} \qquad (2.8)$$

$$U_s(x) = P_s \cdot g_s \qquad (2.9)$$

Fig. 2

$$T_{as,s} = \frac{U_{as}(x)}{U_s(x)} = \underbrace{\frac{g_{as}}{g_s}}_{g_{as,s}} \cdot \frac{n_K}{n_K+1} \cdot 10^{\frac{\Delta\alpha}{10}\cdot x} \qquad (3.1)$$

$$\frac{T_{as,s}}{g_{as,s}} \cdot 10^{-\frac{\Delta\alpha}{10}x} = e^{\frac{-\hbar\,\Omega}{KT}} \qquad (3.2)$$

$$T(x) = \frac{10\log(e)\cdot\hbar\cdot\Omega}{K} \cdot \frac{1}{10\log(T_{as,s}) - 10\log(g_{as,s}) - \Delta\alpha\cdot x} \qquad (3.3)$$

Fig. 3

$$\frac{U_s(x)}{P_o \cdot g_s \cdot C} \cdot 10^{\frac{\Delta\alpha/2}{10} \cdot x} - \frac{U_{as}(x)}{P_o \cdot g_{as} \cdot C} \cdot 10^{\frac{-\Delta\alpha/2}{10} \cdot x}$$

$$= 10^{\int \frac{2\alpha(x)}{10} dx} \qquad (4.1)$$

$$\int \alpha(x) dx = 5 \log \left( U_s(x) \cdot \underbrace{10^{\frac{\Delta\alpha/2}{10} \cdot x} \cdot g_{as,s}}_{W_s(x)} - U_{as}(x) \cdot \underbrace{10^{-\frac{\Delta\alpha/2}{10} \cdot x}}_{W_{as}(x)} \right)$$

$$- \underbrace{\frac{1}{2} \log \left( \frac{P_o}{g_s} g_{as,s} \right)}_{\alpha_{offset}} \qquad (4.2)$$

$$\underbrace{\int \alpha(x) dx}_{L(x)} = 5 \log \left( U_s(x) \cdot W_s(x) - U_{as}(x) \cdot W_{as}(x) \right) - \alpha_{offset}$$

$$(4.3)$$

Fig. 4

Fig. 5a

Fig 5.b

Fig 5C

Fig. 7

**European Patent Office**

**EUROPEAN SEARCH REPORT**

Application Number

EP 06 11 6688

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 21 2005 000001 U1 (AGILENT TECHNOLOGIES INC [US]) 16 February 2006 (2006-02-16) <br> * the whole document * <br> ----- | 1-14 | INV. <br> G01M11/00 <br> H04B10/08 <br> G01N21/65 <br> H01S3/30 <br> G01J3/44 |
| X | EP 0 502 422 A1 (FUJIKURA LTD [JP]) 9 September 1992 (1992-09-09) <br> * abstract * <br> * column 3, line 37 - column 8, line 17; figures 1-6 * <br> ----- | 1-14 | |
| X | WO 2006/045340 A (AGILENT TECHNOLOGIES INC [US]; BELLER JOSEF [DE]) 4 May 2006 (2006-05-04) <br> * abstract * <br> * page 6, paragraph 26 - page 11, paragraph 54; figures 1-3 * <br> ----- | 1-14 | |
| X | DE 40 19 980 A1 (HITACHI CABLE [JP]; TOKYO ELECTRIC POWER COMP [JP] HITACHI CABLE [JP];) 3 January 1991 (1991-01-03) <br> * abstract * <br> * page 19, line 40 - page 27, line 12; figures 34-40 * <br> ----- | 1-14 | TECHNICAL FIELDS SEARCHED (IPC) <br> G01M <br> H04B <br> G01N <br> H01S <br> G01J |
| X | DE 10 2004 015945 B3 (UFZ LEIPZIGHALLE GMBH [DE]) 29 December 2005 (2005-12-29) <br> * abstract * <br> * page 5, paragraph 26 - page 6, paragraph 30; figures 1-4 * <br> ----- | 1-14 | |
| X | EP 0 692 705 A1 (FELTEN & GUILLEAUME ENERGIE [DE]) 17 January 1996 (1996-01-17) <br> * abstract * <br> * column 7, line 10 - column 9, line 15; figures 1-3 * <br> ----- | 1-14 | |

-/--

The present search report has been drawn up for all claims

| Place of search | Date of completion of the search | Examiner |
|---|---|---|
| Munich | 14 December 2006 | BERGADO COLINA, J |

EPO FORM 1503 03.82 (P04C01)

**EP 1 876 435 A1**

European Patent Office

**EUROPEAN SEARCH REPORT**

Application Number

EP 06 11 6688

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YILMAZ ET AL: "A distributed optical fiber sensor for temperature detection in power cables" SENSORS AND ACTUATORS A, ELSEVIER SEQUOIA S.A., LAUSANNE, CH, vol. 125, no. 2, 10 January 2006 (2006-01-10), pages 148-155, XP005221298 ISSN: 0924-4247 * abstract * * page 150, left-hand column - page 154, right-hand column * | 1-14 | |
| X | MOSTAFA AHANGRANI FARAHANI ET AL: "Spontaneous Raman Scattering in Optical Fibers with Modulated Probe Light for Distributed Temperature Raman Remote Sensing" JOURNAL OF LIGHTWAVE TECHNOLOGY, XX, XX, vol. 17, no. 8, August 1999 (1999-08), XP011029474 ISSN: 0733-8724 * abstract * * page 1380, right-hand column - page 1391, left-hand column; figures 2-6 * | 1-14 | TECHNICAL FIELDS SEARCHED (IPC) |
| A | EP 0 636 868 A1 (YORK LTD [GB]) 1 February 1995 (1995-02-01) * abstract * * column 11, line 30 - column 20, line 41; figures 4A-12 * | 1-14 | |
| A | FR 2 853 481 A (FUJITSU LTD [JP]; NIPPON TELEGRAPH & TELEPHONE [JP]) 8 October 2004 (2004-10-08) * abstract * | 1-14 | |

-/--

The present search report has been drawn up for all claims

| Place of search | Date of completion of the search | Examiner |
|---|---|---|
| Munich | 14 December 2006 | BERGADO COLINA, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 876 435 A1**

European Patent
Office

**EUROPEAN SEARCH REPORT**

Application Number

EP 06 11 6688

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 03/029851 A2 (UNIV SOUTHAMPTON [GB]; YUSOFF ZULFADZLI [GB]; BELARDI WALTER [GB]; TEH) 10 April 2003 (2003-04-10) * abstract; figures 10,13,18 * ----- | 1-14 | |
| A,D | US 5 618 108 A (SAI YUKIO [JP] ET AL) 8 April 1997 (1997-04-08) * abstract * * column 5, line 1 - column 15, line 12; figures 1-9 * ----- | 1-14 | |

TECHNICAL FIELDS
SEARCHED        (IPC)

The present search report has been drawn up for all claims

| Place of search | Date of completion of the search | Examiner |
|---|---|---|
| Munich | 14 December 2006 | BERGADO COLINA, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 06 11 6688

This annex lists the patent family members relating to the patent documents cited in the above-mentioned European search report.
The members are as contained in the European Patent Office EDP file on
The European Patent Office is in no way liable for these particulars which are merely given for the purpose of information.

14-12-2006

| Patent document cited in search report | Publication date | Patent family member(s) | Publication date |
|---|---|---|---|
| DE 212005000001 U1 | 16-02-2006 | NONE | |
| EP 0502422 A1 | 09-09-1992 | DE 69210864 D1<br>DE 69210864 T2<br>JP 4274724 A<br>US 5323224 A | 27-06-1996<br>21-11-1996<br>30-09-1992<br>21-06-1994 |
| WO 2006045340 A | 04-05-2006 | NONE | |
| DE 4019980 A1 | 03-01-1991 | GB 2239310 A<br>US 5113277 A | 26-06-1991<br>12-05-1992 |
| DE 102004015945 B3 | 29-12-2005 | NONE | |
| EP 0692705 A1 | 17-01-1996 | AT 164004 T<br>DE 19525626 A1 | 15-03-1998<br>25-04-1996 |
| EP 0636868 A1 | 01-02-1995 | DE 69433154 D1<br>DE 69433154 T2<br>US 5592282 A | 23-10-2003<br>08-04-2004<br>07-01-1997 |
| FR 2853481 A | 08-10-2004 | GB 2400763 A<br>JP 2004282363 A<br>US 2005110980 A1 | 20-10-2004<br>07-10-2004<br>26-05-2005 |
| WO 03029851 A2 | 10-04-2003 | AT 298142 T<br>DE 60204709 D1<br>DE 60204709 T2<br>EP 1430574 A2<br>US 2005147370 A1 | 15-07-2005<br>21-07-2005<br>29-06-2006<br>23-06-2004<br>07-07-2005 |
| US 5618108 A | 08-04-1997 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5618108 A
- EP 05105036 A
- EP 2006050483 W
- EP 2004052670 W

**Non-patent literature cited in the description**

- **J. SENIOR.** Optical Fiber Communications. Prentice Hall, 1992, 91-96